# EUROPEAN PATENT APPLICATION

(11) **EP 4 173 936 A1**
(43) Date of publication of application: **03.05.2023**
(21) Application number: 21205544.6
(22) Date of filing: 29.10.2021
(51) Int. Cl.: B62J 11/10, B62K 21/18

(54) **HANDLEBAR**

(71) Applicant: TIER Mobility SE, 10785 Berlin (DE)
(72) Inventor: ZAJAC, Mariusz, 32-014 Dabrowa (PL); ZARÓW, Jan, 30-694 Kraków (PL); KUCHARCZYK, Michal, 30-633 Kraków (PL)
(74) Representative: Zimmermann & Partner Patentanwälte mbB

(57) **Abstract**

A handlebar (100) for a vehicle (1000), comprising a body (1), a right tube (2), and a left tube (2'); wherein the right tube (2) and the left tube (2') are attached to the body (1); wherein the body (1) comprises a hollow center portion configured to receive cables and/or wires; wherein the body (1) comprises a base portion comprising a clamp (11), the clamp (11) defining a central opening (12) for fastening the handlebar (100) to a steerer shaft (510) of the vehicle (1000); and wherein the central opening (12) is configured as a feedthrough for the cables and/or wires from the hollow central portion into the steerer shaft. A method of manufacturing the handlebar (100), wherein the method comprises: die casting or injection molding the body (1); hydroforming of right and left tubes (2, 2'); and joining of the right and left tubes (2, 2') with corresponding support portions (18) of the body (1). A vehicle (1000) comprising the handlebar (100).

## Description

### FIELD AND BACKGROUND

The present invention relates to a handlebar for a vehicle like, e.g., a bicycle, a bike, a scooter, or a roller, preferably, to such vehicles shared among authorized users.

Different handlebars are known. Typically, they comprise simple tubes which are joined directly or via a stem to the steerer shaft. Sleeves with cables for brake and gear shift are typically attached to the outside of the handlebar and thus freely accessible.

The cables, lines and vehicle electronics connected to the handlebar, e.g. an IoT device, must be protected from external influences such as breakage and destruction.

The handlebar must ensure such mechanical strength that it can transmit different loads present while riding the vehicle, e.g. an electric bike.

### BRIEF SUMMARY

In view of the above, a handlebar according to claim 1, a method of manufacturing the same, and a vehicle are suggested.

Particularly, according to an embodiment, the suggested handlebar comprises: a body, a right tube, and a left tube; wherein the body comprises a hollow center portion configured to receive cables and/or wires; wherein the body further comprises a base portion comprising a clamp, the clamp defining a central opening for fastening the handlebar to a steerer shaft of the vehicle; and wherein the central opening is configured as a feedthrough for the cables and/or wires from the hollow central portion into the steerer shaft.

Further, a method of manufacturing said handlebar is suggested, wherein the method comprises: die casting or injection molding of a body of the handlebar; hydroforming of right and left tubes; and joining of the right and left tubes with corresponding right and left support portions of the body.

Furthermore, a vehicle comprising said handlebar is suggested, wherein the vehicle is driven by a battery powered motor and at least one of a loading status of the battery, a status of the engine, a driving speed, and a distance to a point of interest or to a loading station is indicated on the display of the handlebar.

Advantageously, the described handlebar is light weight and stable and allows mounting of a complex cable harness inside the handlebar, and hence, a reliable protection of any cables against vandalism.

### BRIEF DESCRIPTION OF THE DRAWINGS

A full and enabling disclosure of the present invention, including the best mode thereof, to one of ordinary skill in the art, is set forth more particularly in the remainder of the description, including reference to the accompanying figures.
**Figure 1** shows the structure of an embodiment of the suggested handlebar.
**Figure 2** shows an embodiment of a handlebar ready for mounting and two cross-sections of its body 1.
**Figure 3** shows the handlebar 100 before mounting it to the steerer shaft.
**Figure 4** shows a front view (B) and a rear view (A) of the handlebar 100.
**Figure 5** illustrates two views from the underside of the handlebar 100.
**Figure 6** is an exploded view of the handlebar part of a vehicle.
**Figure 7** shows an exploded view of the underside of the suggested handlebar 100 according to an embodiment.

In the following detailed description, reference is made to the accompanying figures, which form a part hereof, and in which are shown by way of illustration specific embodiments and features of the invention. It is to be understood that other embodiments may be utilized and structural or logical changes may be made without departing from the scope of the present invention. The following detailed description, therefore, is not to be taken in a limiting sense, and the scope of the present invention is defined by the appended claims.

### DETAILED DESCRIPTION

The use of the word "a" or "an" when used in conjunction with the term "comprising" in the claims and/or the specification may mean "one," but it is also consistent with the meaning of "one or more," "at least one," and "one or more than one."

The use of the term "or" in the claims is used to mean "and/or" unless explicitly indicated to refer to alternatives only or the alternatives are mutually exclusive, although the disclosure supports a definition that refers to only alternatives and "and/or."

As used in this specification (above and below) and claims, the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The technical object of the described embodiments is to provide a vehicle 1000 with a mechanically stable handlebar 100 comprising a self-supporting network of partially merging ribs 111, 15, 18. Openings and interspaces in/of the ribs forming a network are adapted to receive bundled cables 125, e.g. brake cables, shifter cable and brake lever position sensor cables integrated within a head tube of the vehicle's frame. A horizontal inner central rib has typically at least two large openings for cables and wires running from left and right tubes 2', 2 to the base part comprising the clamp 11 of the body 1 of the handlebar 100. If a cable of an external element is guided into the tubes 2, 2', at the entry into the corresponding tube a cable protector 21, e.g. a shifter cable protector may be used, Other protectors for other cables and wires may be used in the handlebar 100 as well.

The main advantage of cables and signal wires running inside the frame of the vehicle comprises their reliable protection against damage, especially against vandalism.

Thus, according to an embodiment a handlebar is suggested which comprises a body, a right tube, and a left tube; wherein the body comprises a hollow center portion configured to receive cables and/or wires; wherein the body further comprises a base portion comprising a clamp, the clamp defining a central opening for fastening the handlebar to a steerer shaft of a vehicle; and wherein the central opening is configured as a feedthrough for the cables and/or wires from the hollow central portion of the handlebar into the steerer shaft or tube of the vehicle

Advantageously, the suggested handlebar is light weight and stable and allows mounting of a complex cable harness inside it, and hence, provides a reliable protection of any cables against damage.

According to an embodiment the body comprises a front opening and a top opening.

Advantageously, these openings provide reliable support for various valuable additions to the handlebar. In particular, the front opening provides a stable mount for e.g. a headlight and/or a speaker. The top opening is designed to accommodate additional devices, e.g., an IOT device, a display and/or tracking device, a mount for a mobile device, e.g., a cell phone. If the openings are provided with appropriate seals, these devices are protected from adverse conditions, such as moisture, even in winter, so that the vehicle can remain outside all year round.

According to an embodiment the front opening is configured to receive a loudspeaker and/or a headlight, and the top opening is configured to receive at least one of a mobile device holder, a display and/or a tracking device, and/or an IOT device.

Advantageously, these devices or modules enhance driving comfort and being allocated in/on the body of the handlebar are easily visible to the driver.

According to an embodiment the body comprises stiffening ribs, preferably inner stiffening ribs, and at least a central plate in or adjacent to the inner hollow portion.

Advantageously, These ribs stabilize the handlebar, regardless of what material the body of the handlebar is made of. In addition, the plate allows the secure attachment of various devices mounted in the openings of the body.

According to an embodiment the stiffening ribs are oriented substantially parallel to a central axis of the clamp and adjoin at least one of the clamp and the central plate.

Advantageously, this alignment of the stiffeners has the advantage that they can also safely absorb the forces occurring under high loads.

According to an embodiment the body comprises support portions at a left and at a right side of the body which are configured to be at least partially inserted into left and right tubes, respectively.

Advantageously, the stability of the handles of the handlebar is thus improved.

According to an embodiment left and right support portions are adjoining the central plate or are connected by the central plate with each other.

Such improves the stability of the handlebar even further.

According to an embodiment the very body is formed as a single-piece, as a core, i.e. it comprises a single unit having the hollow inner portion.

Advantageously, this reliably ensures stability of the handlebar.

According to an embodiment, the body includes right and left openings disposed adjacent to and oriented substantially parallel to the support sections and configured for the passage of cables and/or wires extending from the right and left tubes into the hollow central portion of the body.

Advantageously, the usually less flexible cables can be conveniently routed inside the handlebar. Typically, the body is produced by die casting, injection molding or by an additive process such as laser-assisted sintering in a layer-by-layer process. The right and left tubes are typically made by hydroforming. In addition, the body can be made from plastics, metals - such as aluminum or magnesium, aluminum or magnesium alloys, or even gray cast iron - and even ceramics. The additive manufacturing processes mentioned are very flexible and can easily be adapted to changes in the design, should this be necessary.

According to an embodiment at least one of the right and left tube comprises at least one opening configured as a cable or wire feedthrough from an exterior of the tube into a hollow center of the tube and further into the hollow inner portion of the body, wherein the hollow center is fluidically connected with the hollow inner portion of the body.

Advantageously, cables and wires can thus be protected, e.g. against mechanical damage.

According to an embodiment said cables and/or wires are connected to one of a brake, a gear shifter, a sensor, e.g. a brake lever position sensor, a headlight, a speaker, a display and/or tracking device, an IOT device, and a direction indicator or turn signal cable.

Advantageously, these elements are essential for the proper functioning of the vehicle and must therefore be reliably protected.

According to an embodiment the body comprises a metal or a polymer, and the right tube and the left tube comprise a metal.

Advantageously, the material of the body can be selected from an aluminum or magnesium alloy, but can also comprise a polymer such as HDPP or a liquid crystal polymer, which are known to be quite impact resistant. The metal of the tubes may be aluminum or, for example, steel. Advantageously, the resulting handlebar is lightweight and strong.

According to an embodiment the central plate comprises at least one opening for a passage of cables and/or wires.

Advantageously, these openings allow easy cable passage without compromising stability and strength of the handlebar.

According to an embodiment a method of manufacturing said handlebar is suggested, wherein the method comprises: die casting or injection molding of the body of the handlebar; hydroforming of right and left tubes; and joining of the right and left tubes with corresponding right and left support portions of the body. Typically, the manufacturing process comprises all of the mentioned process steps: fabricating the body, hydroforming the tubes and joining them accordingly.

Advantageously, three basic parts of the handlebar facilitate the mounting of the cables and signal wires inside the handlebar. Alternatively, the body may be fabricated by laser supported sintering of a powder in a layer-by-layer technique. The powder may comprise a metal or a metal oxide, e.g. a ceramic. Such alternative techniques may be summarized as additive manufacturing technique. Advantageously, the design of the corresponding body and, hence, the technical properties and the appearance of the resulting handlebar may swiftly be modified, as the virtual design model (file) is used more or less directly in the fabrication process.

According to an embodiment the body is fabricated by die casting of aluminum and the joining comprises a welding, particularly a welding with filler between a collar of the body and a collar fitting end of right and left tubes, respectively, or a crimping.

Advantageously, said technologies are reliable and adapted for mass production.

According to an embodiment a wall of the right and left tubes each is provided at their collar fitting ends with at least one hole for the passage of a cable or a wire. Accordingly, subsequently after the hydroforming process follows a corresponding step, e.g. a drilling or grinding process step to produce the corresponding holes at the collar fitting ends of the tubes. Therein, the collar fitting end is considered to be the end of the tube which is connected to the support portion of the body.

Advantageously, any cable or wire may completely be protected. At the entry of a cable or wire into the tube a protector may be provided. Such may be used, e.g., for the shifter cable.

According to an embodiment the manufacturing further comprises a CNC machining process at least of the body and/or blasting and powder coating of an external surface of the handlebar.

Advantageously, any irregularities and help structures may be grinded off and a smooth surface can be produced.

According to an embodiment a vehicle comprising said handlebar is suggested.

Advantageously, all cables and wires can be routed inside the handlebars and tubes of the frame. The resulting appearance of the vehicle is simple and plain. Furthermore, as a technical effect, the cables are effectively protected against adverse effects, e.g. against vandalism.

According to a modification of said embodiment, the vehicle is configured for sharing among authorized users.

Advantageously, the IOT device and the display which are integrated into the body are easily configured for rental use.

According to an embodiment the vehicle is driven by a battery powered motor and at least one of a loading status of the battery, a status of the motor, a driving speed, and a distance to a point of interest or to a loading station is indicated on the display of the handlebar.

Advantageously, said status information can thus be easily transferred to the driver.

Each embodiment described above may be combined with any other of the described embodiments unless clearly indicated to the contrary.

A full and enabling disclosure of the present invention, including the best mode thereof, to one of ordinary skill in the art, is set forth more particularly in the remainder of the description, including reference to the accompanying figures.

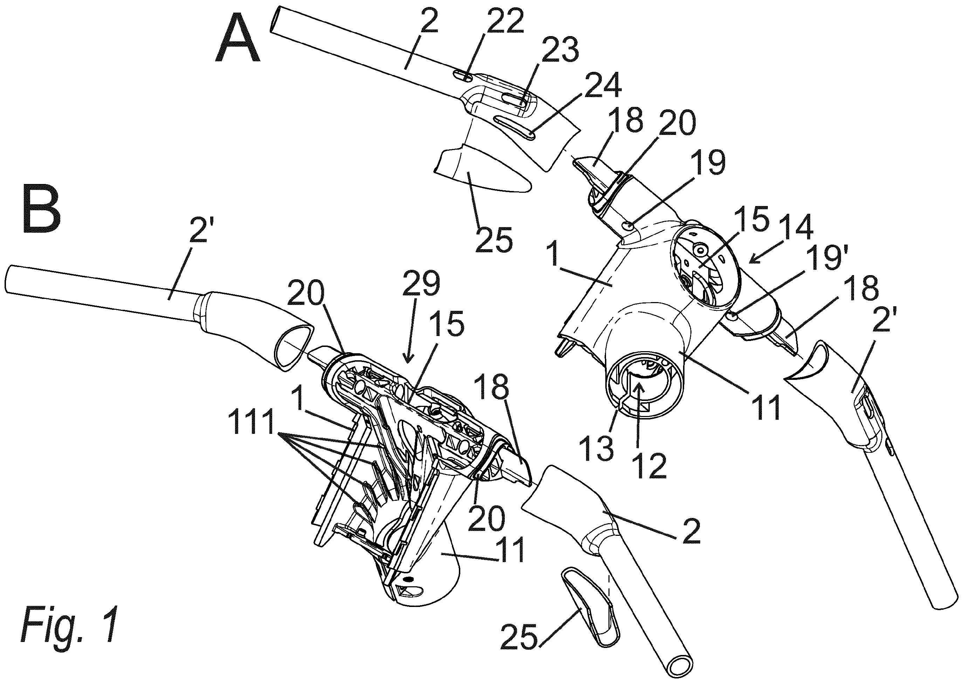

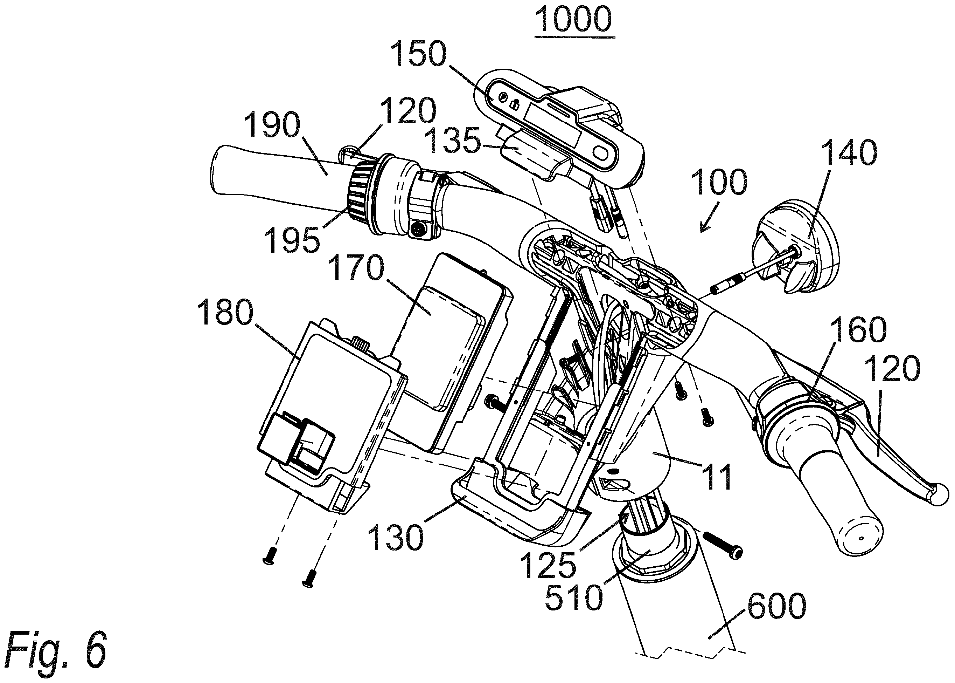

As shown in **Fig. 1** the handlebar 100 comprise a body 1 and two tubes 2, 2' which are attached to left and right sides of the body 1. They rest on support portions 18 protruding from the left and right sides of the body 1. Said support portions 18 at their base each are surrounded by a collar 20. Bores 19 may be used for mounting of the display 150 to the top opening 29 as shown in Fig. 6. The collar 20 has an outer diameter fitting with an inner diameter of the base parts of the tubes 2, 2'. As shown in Fig. 1B the support portions 18 can be shaped as vertically oriented blades. At their side there is at least one opening 26, 27, 28 of an inner channel which is fluidically connected with the hollow center portion of the body 1 for passage of at least one cable or wire. The body 1 comprises a top opening 29 and a front opening 14. The shape of the openings is adapted for fitting with corresponding devices. Typically, the front opening 14 is adapted to receive a headlight 140, e.g. a LED headlight with a lens, and/or a loudspeaker 140. These devices have typically a circular outer shape. Accordingly, the shape of the front opening is circular. However, other shapes, e.g. elliptical or rectangular shapes are conceivable as well. Usually, the corresponding device is tightly fitting with a rim of the front opening 14, advantageously equipped with a sealing ring in order to prevent moisture from entering the handlebar 100. Alternatively, the loudspeaker 140 and/or the headlight 140 can also be glued into the front opening. In both Figs. 1A and 1B the central plate 15 behind the front opening 14 is shown. It comprises at least one opening 16, advantageously two half-openings 16, for feedthrough of cables 125 and wires 125. At the base of the body 1 there is a clamp 11 comprising a tube with a slit 13. The inner circumference of said clamp 11 fits with the steerer tube 510 or shaft 510 which rotates inside the head tube 600 of the vehicle 1000, typically a bike 1000 or a scooter 1000. Opposite and slightly inclined there is the top opening 29 of the body 1. It is configured to accommodate other devices which are useful for convenient driving: a mobile device holder 130, a display and/or tracking device 150, an IOT (internet of things) device 170. According to an embodiment the mobile device holder 130 comprises a spring-loaded lower jaw 130 which may, e.g., slide on corresponding rails 30; and a cover plate 180. The mobile device holder may comprise a support or upper yaw 135 provided by the housing of the display 150.

The right and left tube 2, 2' comprise openings 22, 23, and 24 for feedthrough of cables or wires of corresponding elements. For instance, the shifter cable may be guided through opening 24 in the right tube 2 and its entry into the tube 2 be protected by a cable protector 25. Said cable protector 25 is joined with the tube 2, e.g., by welding (advantageously using a filler).

According to an embodiment the walls of the body 1 surrounding its hollow center portion carry stiffening ribs 111. These stiffening ribs 111 are oriented parallel to a central mounting axis (not shown) of the handlebar 100. Some of the stiffening ribs 111 are merging with the central plate 15, which is oriented in a substantially vertical direction.

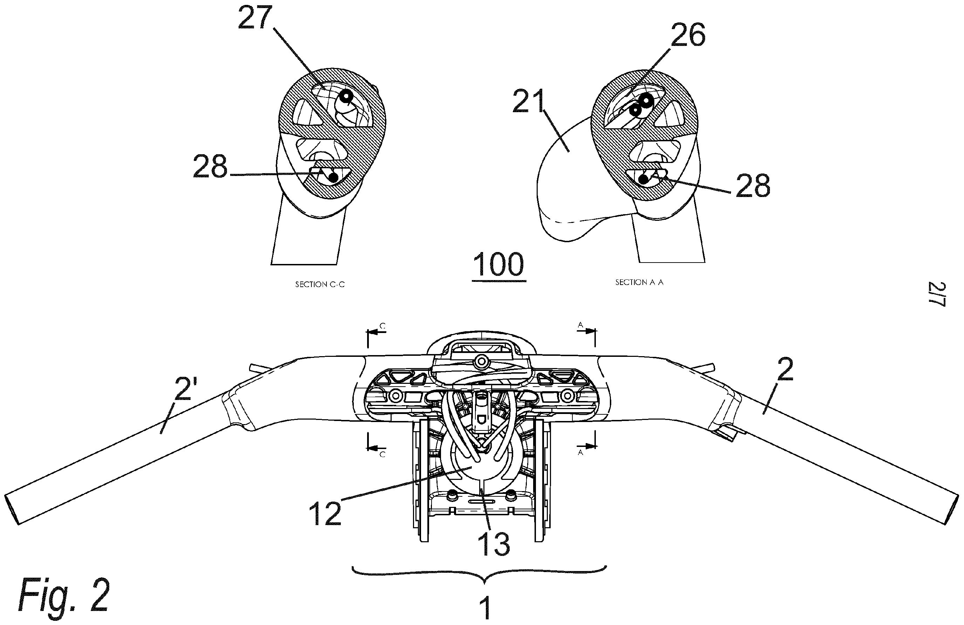

**Fig. 2** illustrates the essentially identical, i.e. mirrored structure and arrangement of channels 26, 27, 28 inside the left and right sides of the body 10. The channels 26, 27 may be configured for receiving, e.g., front wheel brake and rear wheel brake, or vice versa. There is also a channel, e.g. 28 for receiving e.g. a (left and right) brake handle sensors or indicator lights cable. the center of Fig. 2 the body together with fitted thereto tubes 2, 2' is shown in a projection along the vertical mounting axis of the handlebar 100 with the central opening 12 which together with the slit 13 forms the clamp 11 (not shown). The black circles and points inside channels 26, 27, and 28 in section AA and section CC above represent corresponding cross-sections of cables and wires as apparent from the overview of the handlebar 100 below.

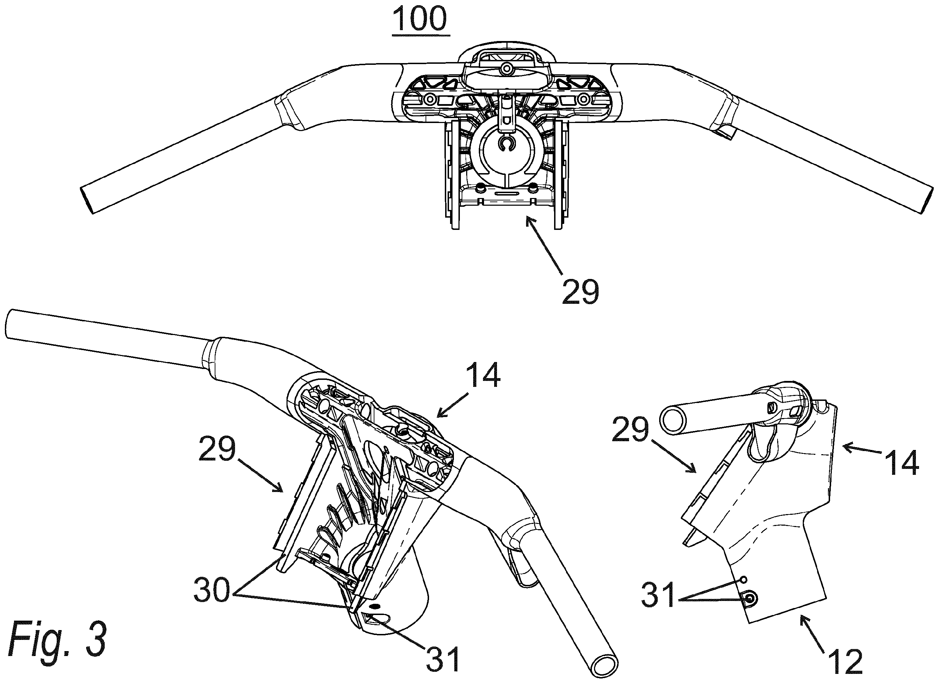

**Fig. 3** shows the upper part of the body 10 of a handlebar 100 before mounting it to the vehicle 1000. The opening or recess 29 therein is provided with bores for fixing bolts of one or more corresponding modules, e.g. the display module, a tracking device, an IOT device 170 or a mobile device holder 130 (e.g. for a smartphone). Within this recess 29, vertically extending ribs 111 merge into horizontally extending ribs, the latter forming a stiffening framework in the upper part of the body 1. The horizontal ribs extend from the front opening 14 to the left and to the right forming at their outer ends cable guide shoulders 15.

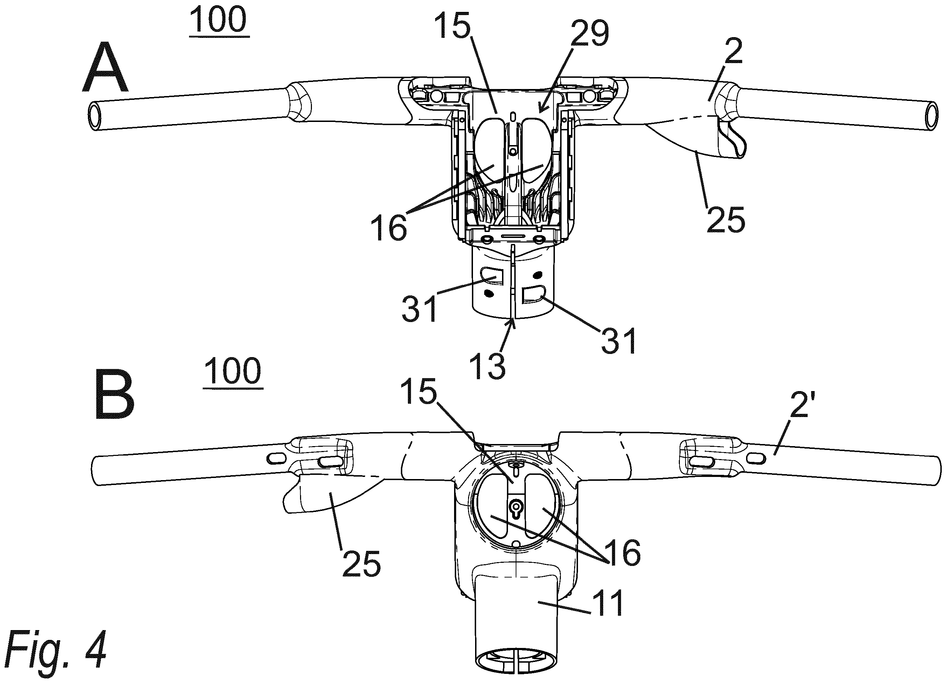

The top view in **Fig. 4A** shows the top opening 29 which is configured to receive at least one of a display module and/or tracking device 150, an IOT device 170, or a mobile device holder comprising a slidable jaw 130 and a stationary yaw, e.g. an upper jaw 135. Also, two bores 31 for fastening bolts are visible to the driver, as long as no mobile device is placed in the mobile device holder 130, 135 yet. The upper part of the top recess 29 is configured to receive the display or screen 150. Said display may have indicators, e.g. of the battery status. Thus, said display 150 or screen 150 is typically adapted to show a status information, e.g. about a battery status, a remaining distance to a point of interest, a velocity, or an accrued rent. However, in the illustrated state, without the display 150 mounted yet, an inner central horizontal rib 15 with two large openings 16 for cable couples running out of right and left tubes 2, 2' is visible. Said inner central horizontal rib 15 at its left and right sides is supported by longitudinal ribs 111 which are merging it. The base part of the body 1 having the longitudinal slit 13 forms a clamp 11 for fastening the handlebar 100 to the steerer shaft 510 as clearly shown in the front view in **Fig. 4B****.** The clamp defines a base opening 12. The large openings 16 in the inner central horizontal rib 15 advantageously allow cables of speaker, display, brake and shifter to be mounted inside the vehicle's steerer 100 and hence be protected from any damage, e.g. by vandalism.

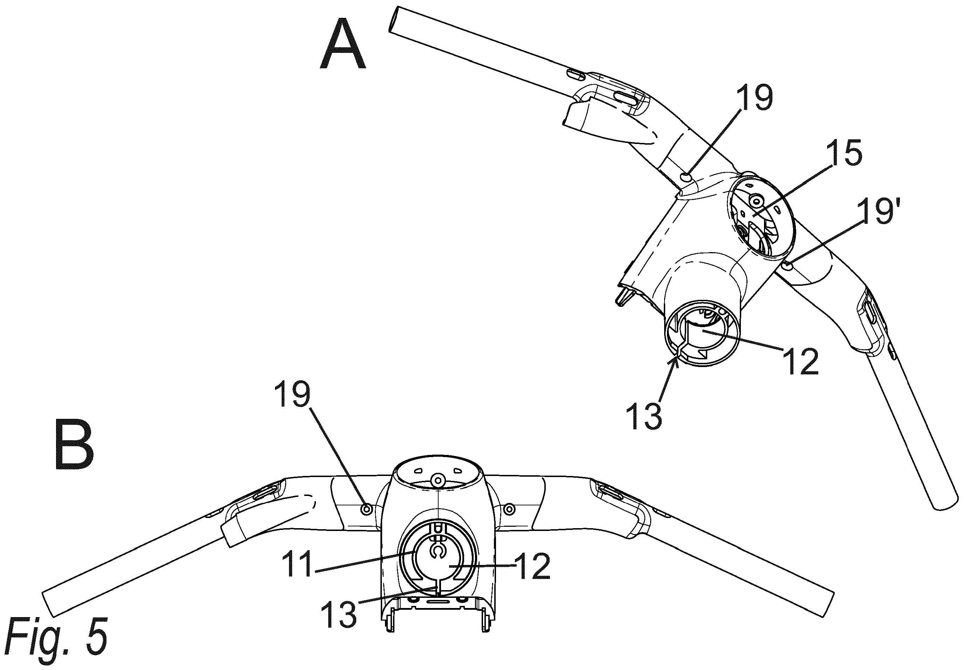

Both views A and B in **Fig. 5** show the base opening 12 (central opening) with the slit 13, which together form the clamp 11 for fastening the handlebar 100 to the steerer shaft 510, and the front opening 14. The front opening 14 at its bottom and/or inner wall - essentially the central plate 15, may comprise bores or recesses for fixation of the loudspeaker 140 or the headlight 140. At the bottom side of the handlebar 100, there are also bores 19, 19' for fixation bolts of the display 150 and/or the support portions 18 to the body 1, if they should be made as separate parts.

**Fig. 6** shows an exploded view of the upper part of the vehicle 1000 comprising the suggested handlebar 100 with its constituents. A loudspeaker 140 or headlight 140 may be fitted into the front opening 14 of the body 1. Further, in the top opening 29 of the body 1 a display 150 and/or a tracking device 150 may be mounted. A frame holding these devices may comprise a static (upper) jaw 135 of the mobile device holder, having a slidable (lower) jaw 130, which is led by sliding rails 30. Further, according to an embodiment, the top opening 29 of the body 1 is adapted to receive and hold an IOT device 170 which is covered by a cover 180. The cover 180 may carry a matrix code, e.g. a QR code (not shown) to be used by the driver or for management purposes. The tubes 2, 2' now comprise grips 190 and levers 120, e.g. for the brakes. They also may comprise switches, e.g. sliding rings, for a bell 195 or another signal device (e.g. a direction indicator) and/or a shifter 160.

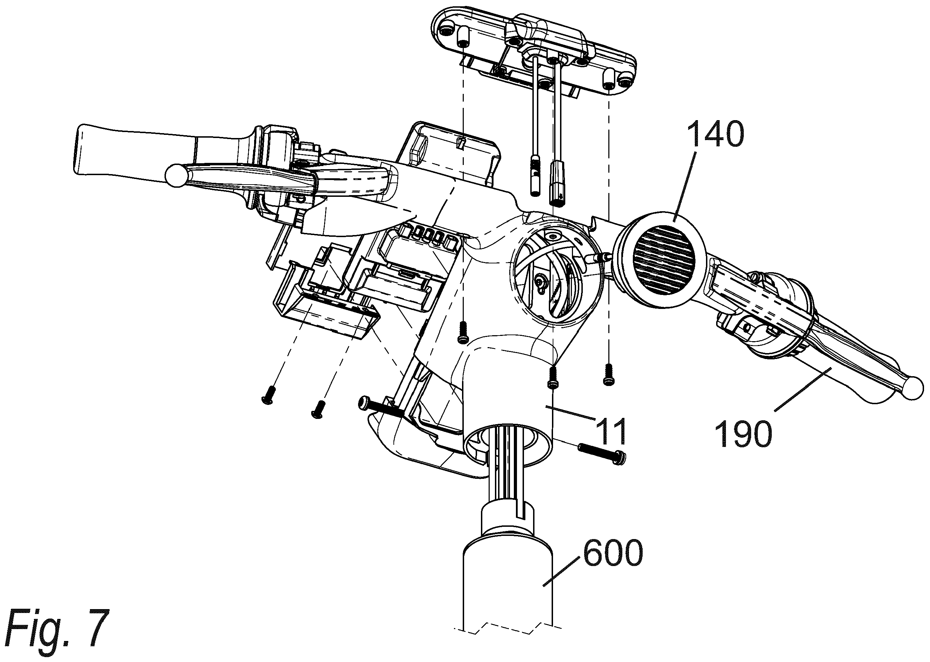

The elements in **Fig. 7** correspond to the ones shown in the previous **Figs. 1-6****.** The IOT device 170 comprises, e.g., connectors for the cables of the loudspeaker 140 and/or headlight 140. Bolts running through the bores 19 may be used to fix the display module 150 and the left and right tubes 2', 2 to the shoulders of the body 1.

The present invention has been explained with reference to various illustrative embodiments and examples. These embodiments and examples are not intended to restrict the scope of the invention, which is defined by the claims and their equivalents. As is apparent to one skilled in the art, the embodiments described herein can be implemented in various ways without departing from the scope of what is invented. Various features, aspects, and functions described in the embodiments can be combined with other embodiments.

### REFERENCE SIGNS

- 1: handlebar body
- 11: clamp, formed at base of the body
- 12: base opening, central opening
- 13: slit
- 14: front opening
- 15: central plate
- 16: cable feedthrough openings
- 18: support portion
- 19,: 19' bore for fastening bolt
- 2, 2': right and left (hydroformed) tubes
- 20: collar
- 21: (shifter) cable protector
- 22: (brake) lever positioning hole
- 23: (brake) cable opening
- 24: (shifter) cable opening
- 25: (shifter) cable protector
- 26: cable channel (e.g. for brake cable and shifter cable)
- 27: cable channel (e.g. for brake cable)
- 28: cable channel (e.g. for brake handle sensor and/or for indicator light cable)
- 29: top opening (e.g. for display module, tracking device, IOT device, and/or for mobile device holder)
- 30: sliding rails (e.g. for device holder jaw)
- 31: bore for fastening bolt
- 111: stiffening ribs
- 120: (brake)lever
- 125: cables or wires connected to, e.g., brake, shifter, brake lever position sensor, headlight, speaker, direction indicator, IOT-device, battery...
- 130: mobile device holder, spring loaded lower jaw
- 135: upper yaw of mobile device holder
- 140: loudspeaker or headlight
- 150: display and/or tracking device
- 160: shifter
- 170: IOT (internet of things) device
- 180: cover, cover plate
- 190: grip
- 195: bell
- 510: steerer shaft, steerer tube
- 600: frame (head tube)
- 1000: vehicle

According to an aspect, the following clauses describe embodiments of the invention:
Clauses:
   1. A handlebar (100) for a vehicle (1000), comprising a body (1), a right tube (2), and a left tube (2');
      wherein the right tube (2) and the left tube (2') are attached to the body (1);
      wherein the body (1) comprises a hollow center portion configured to receive cables and/or wires;
      wherein the body (1) comprises a base portion comprising a clamp (11), the clamp (11) defining a central opening (12) for fastening the handlebar (100) to a steerer shaft (510) of the vehicle (1000); and
      wherein the central opening (12) is configured as a feedthrough for the cables and/or wires from the hollow central portion into the steerer shaft.
   2. The handlebar (100) according to clause 1, wherein the body (1) comprises a front opening (14) and a top opening (29).
   3. The handlebar (100) according to clause 2, wherein the front opening (14) is configured to receive a loudspeaker (140) and/or a headlight (140), and the top opening (29) is configured to receive at least one of a mobile device holder (130), a display and/or a tracking device (150), and/or an IOT device (170).
   4. The handlebar (100) according to any of clauses 1 through 3, wherein the body (1) comprises a plurality of inner stiffening ribs (111) and at least a central plate (15) in the hollow inner portion.
   5. The handlebar (100) according to clause 4, wherein the inner stiffening ribs (111) are oriented substantially parallel to a central axis of the clamp (11) and adjoin at least one of the clamp (11) and the central plate (15).
   6. The handlebar (100) according to any of clauses 1 to 5, wherein the body (1) comprises support portions (18) at a left and at a right side of the body (1) configured to be at least partially inserted into left and right tubes (2, 2'), respectively.
   7. The handlebar (100) according to clause 6, wherein left and right support portions (18) are adjoining the central plate (15) or are connected by the central plate (15).
   8. The handlebar (100) according to any of the preceding clauses, wherein the body (1) is formed as a single-piece.
   9. The handlebar (100) according to any of clauses 6 - 8, wherein the body (1) comprises right and left openings adjacent and substantially parallel to the support portions (18) configured for feedthrough of cables and/or wires running from the right and left tubes (2, 2') into the hollow center portion of the body (1).
   10. The handlebar (100) according to any of clauses 1 through 9, wherein at least one of the right and left tube (2, 2') comprises at least one opening (23, 24) configured as a cable or wire feedthrough from an exterior of the tube (2, 2') into a hollow center of the tube (2, 2'), wherein the hollow center is fluidically connected with the hollow center portion of the body (1).
   11. The handlebar (100) according to any of clauses 1 through 10, wherein the cables and/or wires are connected to one of a brake, a gear shifter (160), a brake lever position sensor, a headlight (140), a speaker (140), a display and/or tracking device (150), an IOT device (170), and a direction indicator.
   12. The handlebar (100) according to any of clauses 1 through 11, wherein the body (1) comprises a metal or a polymer, and the right tube (2) and the left tube (2') comprise a metal.
   13. The handlebar (100) according to any of clauses 4 through 12, wherein the central plate (15) comprises at least one opening for a passage of cables and/or wires (125).
   14. A method of manufacturing a handlebar (100) according to any of clauses 1-13, wherein the method comprises:
      - die casting or injection molding the body (1);
      - hydroforming of right and left tubes (2, 2'); and
      - joining of the right and left tubes (2, 2') with corresponding support portions (18) of the body (1).
   15. The method according to clause 14, wherein the body (1) is fabricated by die casting of aluminum and the joining comprises a welding between a collar (20) of the body (1) and a collar fitting end of right and left tubes (2, 2').
   16. The method according to clause 14 or 15, wherein a wall of the right and left tubes (2, 2') each is provided at their collar fitting ends with at least one hole for the passage of a cable or a wire (125).
   17. The method according to any of clauses 14-16, further comprising a CNC machining at least of the body (1) and/or blasting and powder coating of an external surface of the handlebar (100).
   18. A vehicle (1000) comprising a handlebar (100) according to any of clauses 1 - 13.
   19. The vehicle (1000) according to clause 18, wherein the vehicle (1000) is adapted for rental or sharing.
   20. The vehicle (1000) according to clause 18 or 19, wherein the vehicle (1000) is driven by a battery powered motor and at least one of a loading status of the battery, a status of the motor, a driving speed, and a distance to a point of interest or to a loading station is indicated on the display (150) of the handlebar (100).

## Claims

1. A handlebar (100) for a vehicle (1000), comprising a body (1), a right tube (2), and a left tube (2');
wherein the right tube (2) and the left tube (2') are attached to the body (1);
wherein the body (1) comprises a hollow center portion configured to receive cables and/or wires;
wherein the body (1) comprises a base portion comprising a clamp (11), the clamp (11) defining a central opening (12) for fastening the handlebar (100) to a steerer shaft (510) of the vehicle (1000); and
wherein the central opening (12) is configured as a feedthrough for the cables and/or wires from the hollow central portion into the steerer shaft.

2. The handlebar (100) according to claim 1, wherein the body (1) comprises a front opening (14) and a top opening (29).

3. The handlebar (100) according to claim 2, wherein the front opening (14) is configured to receive a loudspeaker (140) and/or a headlight (140), and the top opening (29) is configured to receive at least one of a mobile device holder (130), a display and/or a tracking device (150), and/or an IOT device (170).

4. The handlebar (100) according to any of claims 1 through 3, wherein the body (1) comprises a plurality of inner stiffening ribs (111) and at least a central plate (15) in the hollow inner portion,
wherein, optionally,
the inner stiffening ribs (111) are oriented substantially parallel to a central axis of the clamp (11) and adjoin at least one of the clamp (11) and the central plate (15).

5. The handlebar (100) according to claim 4, wherein the body (1) comprises support portions (18) at a left and at a right side of the body (1) configured to be at least partially inserted into left and right tubes (2, 2'), respectively,
wherein, optionally,
left and right support portions (18) are adjoining the central plate (15) or are connected by the central plate (15).

6. The handlebar (100) according to any of the preceding claims, wherein the body (1) is formed as a single-piece.

7. The handlebar (100) according to claim 5 or 6, wherein the body (1) comprises right and left openings adjacent and substantially parallel to the support portions (18) configured for feedthrough of cables and/or wires running from the right and left tubes (2, 2') into the hollow center portion of the body (1).

8. The handlebar (100) according to any of claims 1 through 7, wherein at least one of the right and left tube (2, 2') comprises at least one opening (23, 24) configured as a cable or wire feedthrough from an exterior of the tube (2, 2') into a hollow center of the tube (2, 2'), wherein the hollow center is fluidically connected with the hollow center portion of the body (1),
wherein, optionally,
the cables and/or wires are connected to one of a brake, a gear shifter (160), a brake lever position sensor, a headlight (140), a speaker (140), a display and/or tracking device (150), an IOT device (170), and a direction indicator.

9. The handlebar (100) according to any of claims 1 through 8, wherein the body (1) comprises a metal or a polymer, and the right tube (2) and the left tube (2') comprise a metal.

10. The handlebar (100) according to any of claims 4 through 9, wherein the central plate (15) comprises at least one opening for a passage of cables and/or wires (125).

11. A method of manufacturing a handlebar (100) according to any of claims 1-10,
wherein the method comprises:
- die casting or injection molding the body (1);
- hydroforming of right and left tubes (2, 2'); and
- joining of the right and left tubes (2, 2') with corresponding support portions (18) of the body (1).

12. The method according to claim 11, wherein the body (1) is fabricated by die casting of aluminum and the joining comprises a welding between a collar (20) of the body (1) and a collar fitting end of right and left tubes (2, 2'),
wherein, optionally,
a wall of the right and left tubes (2, 2') each is provided at their collar fitting ends with at least one hole for the passage of a cable or a wire (125).

13. The method according to any of claims 11 or 12, further comprising a CNC machining at least of the body (1) and/or blasting and powder coating of an external surface of the handlebar (100).

14. A vehicle (1000) comprising a handlebar (100) according to any of claims 1 - 10, wherein, optionally,
the vehicle (1000) is adapted for rental or sharing.

15. The vehicle (1000) according to claim 14, wherein the vehicle (1000) is driven by a battery powered motor and at least one of a loading status of the battery, a status of the motor, a driving speed, and a distance to a point of interest or to a loading station is indicated on the display (150) of the handlebar (100).
